# EUROPEAN PATENT APPLICATION

(11) **EP 4 644 781 A1**
(43) Date of publication of application: **05.11.2025**
(21) Application number: 24819455.7
(22) Date of filing: 22.03.2024
(51) Int. Cl.: F24C 15/18, F24C 15/02, A47B 88/95, A47J 39/02

(54) **DRAWER APPARATUS**

(30) Priority: 09.06.2023 KR 20230074243; 05.10.2023 KR 20230132892
(71) Applicant: Samsung Electronics Co., Ltd., Suwon-si, Gyeonggi-do 16677 (KR)
(72) Inventor: KWAK, Hyoseon, Suwon-si, Gyeonggi-do 16677 (KR); MOON, Byounghoon, Suwon-si, Gyeonggi-do 16677 (KR); JEONG, Jiwon, Suwon-si, Gyeonggi-do 16677 (KR); LEE, Sunghoo, Suwon-si, Gyeonggi-do 16677 (KR)
(74) Representative: Gulde & Partner
(86) International application number: PCT/KR2024/003588
(87) International publication number: WO 2024/253303

(57) **Abstract**

Provided is a drawer apparatus capable of reducing heat conduction by improving a front panel assembly structure.

The drawer apparatus may include a drawer casing, a drawer heater provided in the drawer casing, and a drawer configured to slide to be inserted into the drawer casing and slide to be withdrawn from the drawer casing, the drawer including a drawer body including an internal space accommodating a cooking material, and a front panel coupled with a front portion of the drawer body, wherein the front panel may include a first panel forming a front surface of the front panel, a second panel provided behind the first panel, and a connecting member connecting the first panel to the second panel, wherein the connecting member may be configured to form a double layer between the connecting member and the first panel and between the connecting member and the second panel.

## Description

### [Technical Field]

The disclosure relates to a drawer apparatus, and more particularly, to a drawer apparatus with improved surface temperature.

### [Background Art]

A drawer apparatus is a cooking apparatus installed in furniture to heat food and dishes using electricity as a heating source.

In general, the drawer apparatus is positioned below a cooking room of an oven or installed in furniture. The drawer apparatus includes a drawer in which cooking materials or dishes are accommodated, a drawer casing which the drawer slides in forward and backward directions thereon to be inserted into or withdrawn from, a heater for heating the cooking materials or dishes accommodated in the drawer, etc. The heater is positioned on the upper or lower side of the drawer casing.

### [Disclosure]

### [Technical Problem]

Therefore, it is an aspect of the disclosure to provide a drawer apparatus capable of improving surface temperature through an improved structure.

It is an aspect of the disclosure to provide a drawer apparatus capable of reducing surface heat conduction by improving an assembly structure of a front panel.

It is an aspect of the disclosure to provide a drawer apparatus capable of realizing surface temperature of a front panel within specifications by reducing a contact area between components.

It is an aspect of the disclosure to provide a drawer apparatus capable of reducing heat conduction of a surface by a multi-layer structure.

It is an aspect of the disclosure to provide a drawer apparatus capable of reducing heat conduction to a surface by a multi-layer structure through a connecting member for forming a double layer between components.

It is an aspect of the disclosure to provide a drawer apparatus capable of replacing a front panel according to a consumer's preference because the front panel is completely detachable.

It is an aspect of the disclosure to provide a drawer apparatus capable of reducing service costs by subdividing a service unit.

It is an aspect of the disclosure to provide a drawer apparatus capable of reducing weight and costs.

The technical object intended to be achieved by the present document is not limited to the above-mentioned technical objects, and other technical objects not mentioned will be clearly understood by one of ordinary skill in the technical art to which the disclosure belongs from the following description.

### [Technical Solution]

A drawer apparatus according to a concept of the disclosure may include a drawer casing, a drawer heater provided in the drawer casing, and a drawer configured to slide to be inserted into the drawer casing and slide to be withdrawn from the drawer casing, the drawer including a drawer body including an internal space accommodating a cooking material, and a front panel coupled with a front portion of the drawer body, wherein the front panel includes a first panel forming a front surface of the front panel, a second panel provided behind the first panel, and a connecting member connecting the first panel to the second panel, wherein the connecting member is configured to form a double layer between the connecting member and the first panel and between the connecting member and the second panel.

A drawer apparatus according to a concept of the disclosure may include a drawer casing having an opening, a drawer configured to slide to be inserted into the drawer casing and slide to be withdrawn from the drawer casing, a drawer heater installed in the drawer casing and configured to heat an internal space of the drawer, a first panel forming a front surface of the drawer and exposed to outside, a connecting member connected to the first panel, and a second panel provided behind the first panel, wherein the second panel may include a first area spaced from the first panel to prevent heat conduction from the drawer heater, and a second area bent from edges of the first area to be in contact with the first panel.

### [Advantageous Effect]

According to an example, by improving the front panel assembly structure of the drawer apparatus, heat conduction to the front panel may be reduced.

According to an example, by reducing a contact area between components, surface temperature of the front panel may be maintained within specifications and weight and costs may be reduced.

According to an example, heat conduction of the surface may be reduced by the multi-layer structure through the first panel, the second panel, and the connecting member between the first panel and the second panel.

According to an example, because the front panel is completely detachable, the front panel may be replaceable.

According to an example, by subdividing a service unit, service costs may be reduced.

### [Description of Drawings]

FIG. 1 is a perspective view of a drawer apparatus of an oven according to an embodiment.
FIG. 2 is a perspective view of the drawer apparatus shown in FIG. 1.
FIG. 3 is a cross-sectional view of the drawer apparatus shown in FIG. 2.
FIG. 4 is a partially exploded perspective view of a drawer apparatus according to an embodiment.
FIG. 5 is an exploded perspective view showing a front panel of the drawer apparatus shown in FIG. 4.
FIG. 6 is a partially cross-sectional perspective view showing a first panel of a front panel according to an embodiment.
FIGS. 7 and 8 are perspective views showing a connecting member of a front panel according to an embodiment.
FIGS. 9 and 10 show a coupled state of a connecting member and a first panel of a front panel according to an embodiment.
FIG. 11 shows a connecting member coupled to a first panel of a front panel according to an embodiment.
FIG. 12 shows coupling of a connecting member and a second panel of a front panel according to an embodiment.
FIGS. 13 and 14 show coupling of a second panel and a connecting member according to an embodiment.
FIG. 15 is a partially cross-sectional view showing a coupled portion of a second panel, and a first panel and a connecting member according to an embodiment.
FIG. 16 shows an insulating material provided in a space S between a second panel and a first panel according to an embodiment.
FIG. 17 shows a cooling hole provided in a first panel according to an embodiment.
FIG. 18 shows a cooling flow path and the cooling hole shown in FIG. 17.

### [Modes of the Invention]

Various embodiments of the present document and terms used therein are not intended to limit the technical features described in this document to specific embodiments, and should be understood to include various modifications, equivalents, or substitutes of the corresponding embodiments.

In connection with the description of the drawings, similar reference numerals may be used for similar or related components.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

As used herein, the term "and/or" includes any and all combinations of one or more of associated listed items.

Terms such as "first", "second", "1^{st}", or "2^{nd}" may be used simply to distinguish a component from other components, without limiting the component in other aspects (e.g., importance or order).

A certain (e.g., a first) component is referred to as "coupled" or "connected" with or without the terms "functionally" or "communicatively" to another (e.g., second) component. When mentioned, it means that the component can be connected to the other component directly (e.g., by wire), wirelessly, or via a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" or "over" another component, it can be directly on the other component or intervening components may also be present.

Meanwhile, in the following description, the terms "front direction", "rear direction", "left direction", "right direction", etc. are defined based on the drawings, and the shapes and positions of the components are not limited by the terms.

Hereinafter, "X" may represent a front-rear direction of a cooking room, "Y" may represent a left-right direction of the cooking room, and "Z" may represent an up-down direction of the cooking room.

Hereinafter, an embodiment of the disclosure will be described in detail with reference to the accompanying drawings.

In an embodiment, a drawer apparatus is described as being installed in an oven. However, the drawer apparatus may be installed in furniture. The drawer apparatus is applicable to a home appliance that may be withdrawn from a drawer casing and include a heater.

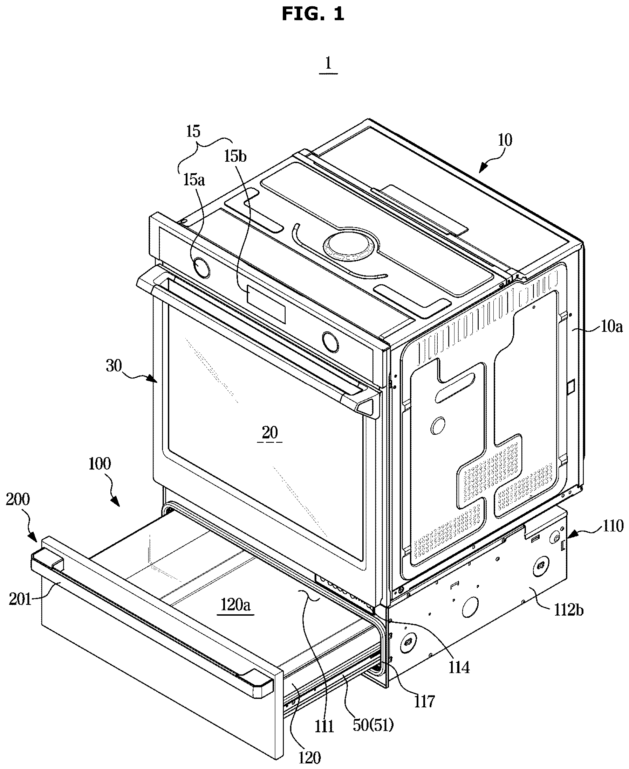

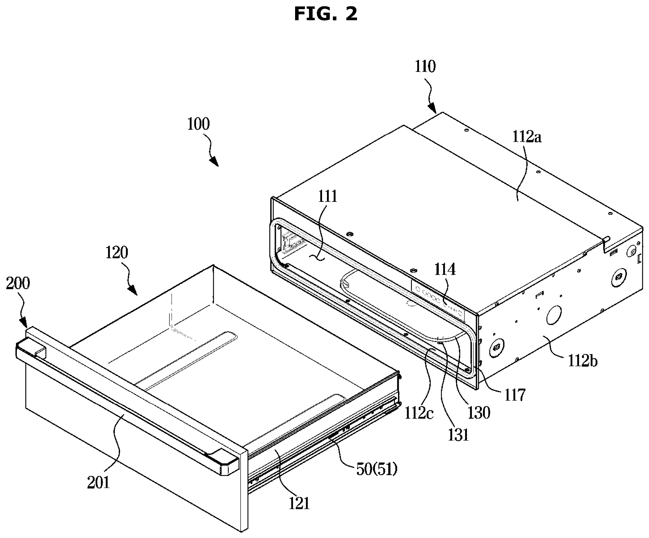

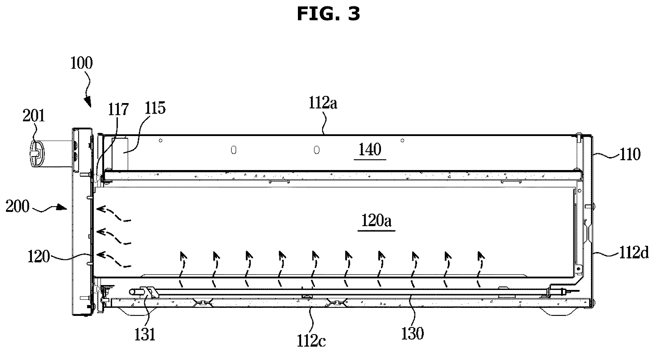

FIG. 1 is a perspective view of a drawer apparatus of an oven according to an embodiment, FIG. 2 is a perspective view of the drawer apparatus shown in FIG. 1, and FIG. 3 is a cross-sectional view of the drawer apparatus shown in FIG. 2.

As shown in FIGS. 1 to 3, an oven 1 may include a main body 10 forming an outer appearance and including a cooking room 20 therein. The main body 10 of the oven 1 may include an inner case 10a forming the cooking room 20, and an outer case (not shown) coupled to an outer side of the inner case 10a and forming the outer appearance of the oven 1.

In the cooking room 20 of the oven 1, a heater (not shown) for heating food may be provided. The heater may be an electric heater including an electrical resistor, although not limited thereto. However, the heater may be a gas heater that generates heat by burning gas. Accordingly, the oven 1 may include an electric oven and a gas oven. Each of the inner case 10a and the outer case may be substantially in a shape of a box of which a front side opens, although not limited thereto. However, the oven 1 may be a built-in type installed in a system kitchen.

The oven 1 may include a door 30 that is provided in a front side of the main body 10 and opens or closes the cooking room 20. On a front and upper portion of the main body 10, a control panel 15 including a control portion 15a for receiving an operation command from a user and a display 15b for displaying operation information of the oven 1 may be provided.

Below the oven 1, that is, below the main body 10, the drawer apparatus 100 may be provided. The drawer apparatus 100 may heat cooking materials, dishes in which cooking materials are put, etc. The drawer apparatus 100 may be installed in furniture (not shown) to heat food, dishes, etc. The drawer apparatus 100 may be a built-in type installed in a system kitchen.

The drawer apparatus 100 may include a drawer casing 110 and a drawer 120.

The drawer apparatus 100 may include the drawer casing 110. The drawer casing 110 may be positioned below the main body 10. The drawer casing 110 may be in a shape of a hexahedron. The drawer casing 110 may include an opening 111 in the front side. The drawer casing 110 may be in a shape of a hexahedron of which a front side opens (111).

The drawer casing 110 may include an upper panel 112a forming an upper surface and having a plate shape, a side panel 112b extending downward from both ends of the upper panel 112a and forming a side surface, a rear panel 112d forming a rear surface, and a bottom panel 112c forming a bottom. The drawer casing 110 may have a box shape of which a front side opens such that the drawer 120 is inserted into or withdrawn from the drawer casing 110 in a front-rear direction. The drawer casing 110 may be configured such that the drawer 120 is inserted into or withdrawn from the drawer casing 110 through the opening 111.

On a front surface of the drawer casing 110, a sealing member 117 may be provided. The sealing member 117 may seal between the drawer casing 110 and the drawer 120. The sealing member 117 may prevent internal heat of the drawer casing 110 from leaking out. The sealing member 117 may cushion an impact between the drawer 120 and the drawer casing 11.

The drawer casing 110 may support weight of the oven 1. The drawer casing 110 may support weight of the main body 10.

The drawer apparatus 100 may include a drawer heater 130. The drawer heater 130 may be installed in the drawer casing 110. The drawer heater 130 may be mounted on the bottom panel 112c of the drawer casing 110. The drawer heater 130 may be mounted by a heater bracket 131 on the bottom panel 112c. The drawer heater 131 may be electrically connected to an external power source (not shown). The drawer heater 131 may emit heat by the external power source.

The drawer heater 130 may heat an inside of the drawer 120 up to preset temperature. A cooking material or a dish that holds a cooking material therein, accommodated in the drawer 120, may be heated or kept warm by heat emitted by the drawer heater 130.

The drawer heater 130 may be positioned inside the drawer casing 110. In the current embodiment, an example in which the drawer heater 130 is mounted on the bottom panel 112c of the drawer casing 110 is shown, although not limited thereto. For example, the drawer heater may be mounted on the upper panel of the drawer casing. Also, the drawer heater may be mounted on upper and lower sides of the drawer casing.

On the front surface of the drawer casing 110, a drawer control portion 114 for controlling the drawer apparatus 100 may be provided. The drawer control portion 114 may enable a user to set temperature and time of the drawer heater 130. According to an embodiment, an example in which the drawer control portion 114 is provided on the front surface of the drawer casing 110 is shown, although not limited thereto. The drawer control portion 114 may enable the user to input a control signal for operating the drawer apparatus 100. The drawer control portion 114 may enable the user to himself/herself input a control signal. The drawer control portion 114 may include at least any one of a switch, a touch screen, or a button.

In the drawer casing 110, a machine room 140 where a plurality of electric components are placed may be provided. The machine room 140 may be provided in an upper space of the drawer casing 110. The machine room 140 may be positioned behind the drawer control portion 114. In the drawer casing 110, a controller 115 for controlling the drawer apparatus 100 according to a control signal input from the drawer control portion 114 may be provided. The controller 115 may be positioned in the machine room 140. The drawer apparatus 100 may include the controller 115 to control the drawer heater 130 according to a control signal input from the drawer control portion 114. The controller 115 may control temperature of the drawer heater 130. The controller 115 may control operation time of the drawer heater 130.

The drawer apparatus 100 may maintain warm temperature of cooked food by storing the food while it is hard to eat the food right away, and raise temperature of dishes that hold food therein to prevent a flavor change that may occur due to a temperature difference between the food and the dishes.

The drawer apparatus 100 may heat food, dishes, and cooked food to keep warm and perform sterilization. The drawer apparatus 100 may be used variously for heating at low temperature of about 50 °C to about 90 °C, defrosting, melting chocolate, etc.

The drawer apparatus 100 may also be used in cooking methods such as sous vide, which maintains characteristics of ingredients by heating at low temperature for a long time. Using the drawer apparatus 100 for a long time may cause temperature of a front exterior of the drawer apparatus 100 to exceed specifications, which may result in injury to the user. The drawer apparatus 100 may reduce heat conduction to the surface by improving a structure of the front panel 200. The drawer apparatus 100 may reduce heat conduction by improving a structure of the front panel 200 of the drawer 120, which forms the front surface. Details about the structure of the front panel 200 of the drawer 120 will be described below.

The drawer apparatus 100 may include the drawer 120 configured to be inserted and withdrawn in the front and rear directions of the oven 1. The drawer apparatus 100 may include the drawer 120 that is inserted into or withdrawn from the drawer casing 110 in the front and rear directions of the drawer casing 110.

The drawer 120 may be a space that substantially accommodates food or dishes for holding food therein, and may be inserted into the drawer casing 110 or withdrawn from the drawer casing 110.

The drawer 120 may include the front panel 200 forming the front surface, and a drawer body 121 which is positioned behind the front panel 200 and in which a cooking material or a dish for holding a cooking material therein is accommodated. The front panel 200 of the drawer 120 may form an outer, front surface of the drawer apparatus 100.

On the front panel 200 of the drawer 120, a drawer handle 201 may be provided. The drawer handle 201 may be provided on a front side of the front panel 200. The drawer handle 201 may be gripped by a user who tries to withdraw the drawer 120 from the drawer casing 110 or insert the drawer 120 into the drawer casing 110.

The drawer body 121 may form an internal space 120a in which a cooking material or a dish for holding a cooking material therein is accommodated. The drawer body 121 may be in a shape of a hexahedron of which upper and front sides open. The drawer body 121 may include a bottom surface 121a, both side surfaces 121b, and a rear surface 121c. On each of both the side surfaces 121b of the drawer body 121, a rail device 50 for moving the drawer 120 may be provided. On the side panel 112b of the drawer casing 110, a rail coupling portion 123 with which a rail 51 of the rail device 50 is coupled may be provided.

On each of both the side surfaces 121b of the drawer body 121, the rail coupling portion 123 with which the rail 51 of the rail device 50 is coupled may be provided. The rail coupling portion 123 may slide the drawer body 121 in the front and rear directions of the drawer casing 110.

On each of both the side surfaces 121b of the drawer body 121, a front panel coupling portion 125 with which the front panel 200 is coupled may be provided. The front panel coupling portion 125 may be formed by bending at least one portion of both the side surfaces 121b of the drawer body 121. The front panel coupling portion 125 may be provided at each of both the side surfaces 121b. The front panel coupling portion 125 may be provided by bending at least one portion of front ends of both the side surfaces 121b.

The front panel 200 coupled with the both side surfaces 121b of the drawer body 121 may be in a shape of a plate. The front panel 200 may have a size and shape corresponding to the opening 111 of the drawer casing 110.

The front panel 200 may include a first panel 210 forming the front surface and exposed to the outside, and a second panel 220 provided behind the first panel 210.

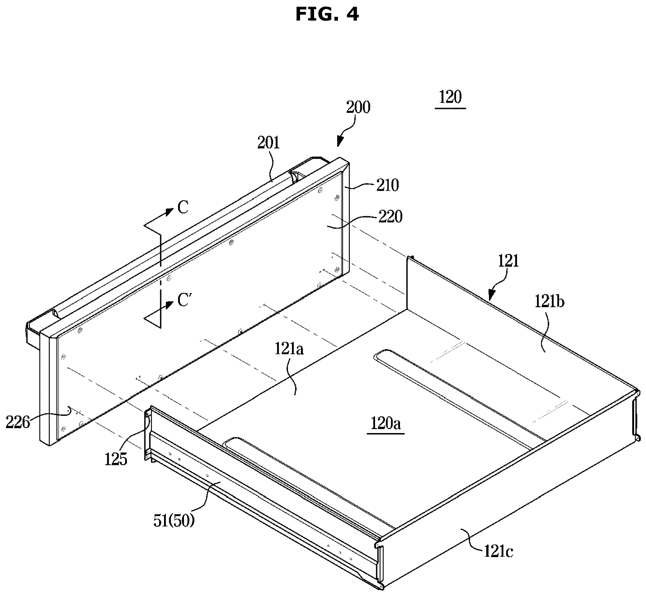

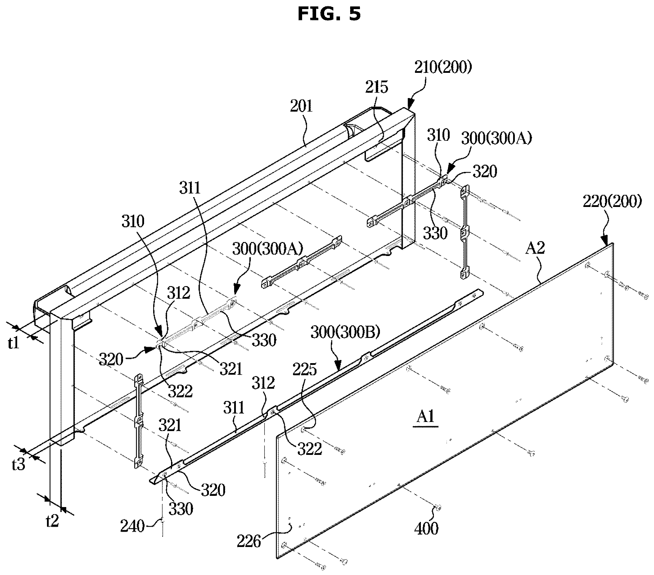

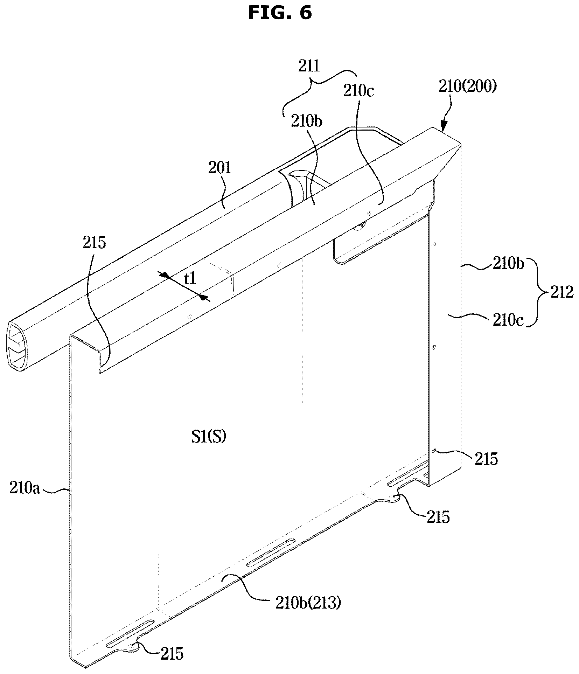

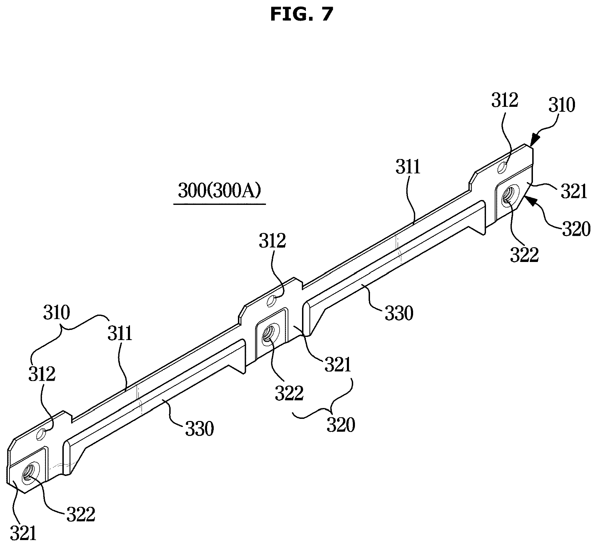

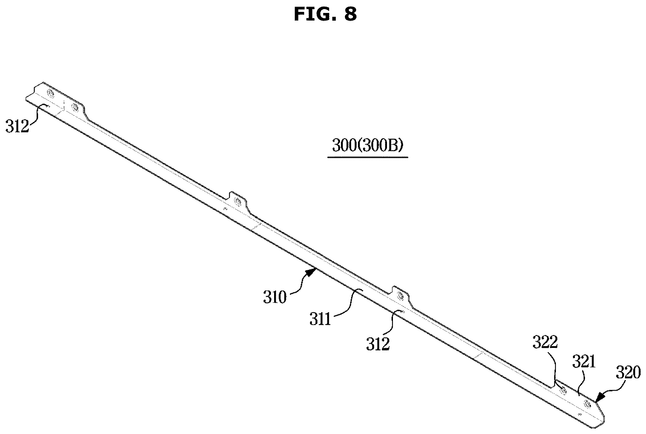

FIG. 4 is a partially exploded perspective view of a drawer apparatus according to an embodiment, FIG. 5 is an exploded perspective view showing a front panel of the drawer apparatus shown in FIG. 4, FIG. 6 is a partially cross-sectional perspective view showing a first panel of a front panel according to an embodiment, and FIGS. 7 and 8 are perspective views showing a connecting member of a front panel according to an embodiment. Hereinafter, descriptions about portions overlapping with those described above will be omitted.

As shown in FIGS. 4 to 8, the front panel 200 of the drawer 120 may include the first panel 210, the second panel 220, and a connecting member 300 connecting the first panel 210 to the second panel 220.

The first panel 210 may form the front surface of the drawer 120. The first panel 210 may form an outer appearance of the drawer 120. The first panel 210 may be exposed to the outside of the oven 1. The first panel 210 may be exposed to the outside of the drawer apparatus 100.

The first panel 210 may include a metal material. The first panel 210 may include at least one among iron, stainless steel, or aluminum.

The second panel 220 may be positioned behind the first panel 210. The second panel 220 may be coupled with a rear side of the first panel 210 and form a rear surface of the front panel 200. The second panel 220 may include a metal material. The second panel 220 may be made of a material that is different from that of the first panel 200. The second panel 220 may include a material having low heat conductivity. The second panel 220 may include a material having lower heat conductivity than the first panel 220. The second panel 220 may include at least one among a resin material, a glass material, or a glass-wool material.

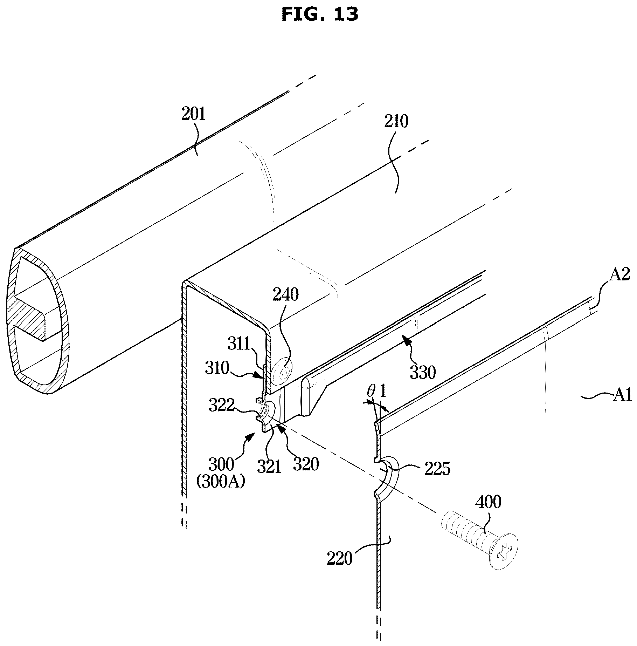

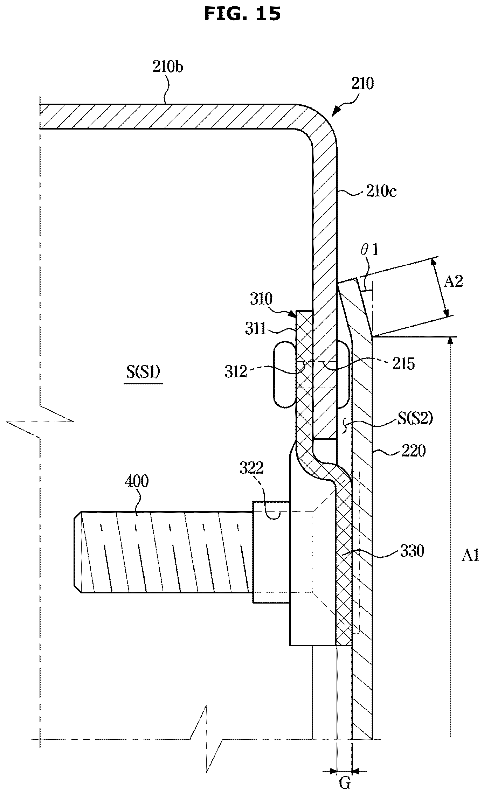

The second panel 220 may include a first area A1 being in a shape of a flat plate and spaced from the first panel 210, and a second area A2 provided in edges of the first area A1. The second area A2 of the second panel 220 may be bent toward the first panel 210 to be inclined. The second area A2 of the second panel 220 may be bent at a first angle θ1 from the first area A1 to be inclined (see FIGS. 13 and 15).

The second panel 220 may be strengthened by bending the first area A1 being in a shape of a flat plate to form the second area A2 bent in four edges of the first area A1.

The first panel 210 may be connected to the second panel 220 through the connecting member 300.

The connecting member 300 may be positioned in upper, lower, left, and right sides of the first panel 210 and the second panel 220. The connecting member 300 may be positioned in four edges of each of the first panel 210 and the second panel 220 to couple the first panel 210 with the second panel 220. In the current embodiment, three connecting members 300 may be positioned in the upper sides, one connecting member 220 may be positioned in each of the left and right sides, and one connecting member 220 may be positioned in the lower sides, thereby connecting the first panel 210 to the second panel 220, although not limited thereto. For example, the number and size of the connecting member may change depending on sizes and shapes of the first panel and the second panel of the drawer apparatus 100.

The first panel 210 may be in a shape of a plate. The first panel 210 may include a first portion 210a being in a shape of a plate, and a second portion 210b bent in the rear direction from an upper end, both side ends, and lower end of the first portion 210a. The first panel 210 may include a third portion 210c bent from the second portion 210b.

The first panel 210 may include an upper flange 211 provided in the upper portion. The upper flange 211 of the first panel 210 may include the second portion 210b and the third portion 210c extending from an upper end of the first portion 210a.

The upper flange 211 of the first panel 210 may include a first space S1 formed by the first portion 210a and the third portion 210c. The upper flange 211 may be formed with a first width t1. The first space S1 may be formed with the first width t1.

The first panel 210 may include a side flange 212 provided in both the side portions. The side flange 212 of the first panel 210 may include the second portion 210b and the third portion 210c extending from both side ends of the first portion 210a.

The side flange 212 of the first panel 210 may include the first space S1 formed by the first portion 210a and the third portion 210c. The side flange 212 may be formed with a second width t2. A second space S2 may be formed with the second width t2. The second width t2 may be equal to the first width t1.

The first panel 210 may include a lower flange 213 provided in the lower portion. The lower flange 213 may include the second portion 210b extending from a lower end of the first portion 210a. The lower flange 213 may be formed with a third width t3. The third width t3 may be equal to the first width t1 or the second width t2.

The upper flange 213a may be provided in an upper end of the first panel 210, the side flange 213b may be provided in the left and right sides of the first panel 210, and the lower flange 213c may be provided in a lower end of the first panel 210.

The first panel 210 may include the first space S1 formed by the upper flange 211, the side flange 212, and the lower flange 213. More specifically, the first space S1 of the first panel 210 may be formed by the first portion 210a and the second portion 210b and the third portion 210c of the upper flange 211. The first space S1 of the first panel 210 may be formed by the first portion 210a and the second portion 210b and the third portion 210c of the side flange 212. Also, the first space S1 of the first panel 210 may be formed by the first portion 210a and the second portion 210b of the lower flange 213.

The first portion 210a, the second portion 210b, and the third portion 210c of the first panel 210 may be integrated into one body. The first portion 210a of the first panel 210 may be positioned in front of the drawer 120 and exposed to the outside. The second portion 210b and the third portion 210c of the first panel 210 may extend from the first portion 210a and be coupled with the connecting member 200 or the second panel 220.

In the first panel 210, a first fixing hole 215 with which the connecting member 300 is coupled may be provided. The first fixing hole 215 may also be provided in the second portion 210b or the third portion 210c of the first panel 210. At least one or a plurality of fixing holes 215 may be provided. The first fixing holes 215 may be arranged to be spaced from each other. The first fixing holes 215 may be arranged to be spaced from each other in the upper flange 211. The first fixing holes 215 may be arranged to be spaced from each other in the side flange 212. The first fixing holes 215 may be arranged to be spaced from each other in the lower flange 213.

The first fixing holes 215 may be provided in the third portion 210c of the upper flange 211. The first fixing holes 215 may be provided in the third portion 210c of the side flange 211. The first fixing holes 215 may be provided in the second portion 210b of the lower flange 213.

The first fixing holes 215 may fix the connecting member 300 to the first panel 210. The connecting member 300 may be coupled with the first fixing holes 215 of the first panel 210 by at least one method of a rivet 240, welding, or a screw.

The connecting member 300 may be coupled with the first panel 210. The connecting member 300 may form a double layer between the connecting member 300 and the first panel 210. The connecting member 300 may be provided with the double layer formed by contacting the first panel 210.

The connecting member 300 may include a first connecting member 300A coupled with the upper flange 211 or the side flange 212 of the first panel 210. The connecting member 300 may include a second connecting member 300b coupled with the lower flange 213 of the first panel 210. Although the first connecting member 300A and the second connecting member 300B are configured with different sizes and shapes, the first connecting member 300A and the second connecting member 300B may have the same characteristics for supporting the first panel 210 and the second panel 220 while providing a space S between the first panel 210 and the second panel 220. In FIGS. 7 and 8, the first connecting member 300A and the second connecting member 300B are shown.

The first connecting member 300A may include a first coupling portion 310 fixed to the first panel 210. The first coupling portion 310 of the first connecting member 300A may be positioned in the upper portion. The first coupling portion 310 may be positioned to correspond to the third portion 210c of the first panel 210. The first coupling portion 310 of the first connecting member 300A may form a double layer by contacting the third portion 210c of the first panel 210.

The first coupling portion 310 may be positioned to correspond to the first fixing hole 215. The first coupling portion 310 may be fixed to the first fixing hole 215 by any method among a rivet 240, welding, or a screw.

The first connecting member 300A may be coupled with an inner surface of the third portion 210c. The first connecting member 300A may be fixed to an inner surface of the upper flange 211.

The first coupling portion 310 of the first connecting member 300A may include a first coupling area 311 supported on the third surface 210c of the first panel 210, and a first coupling hole 312 formed in the first coupling area 311. The first coupling hole 312 may be positioned to correspond to the first fixing hole 215 of the first panel 210.

The first coupling hole 312 of the first coupling portion 310 may be fixed to the first fixing hole 215 of the first panel 210 by any method among a rivet 240, welding, or a screw.

The first coupling portion 310 may fix the first connecting member 300A to the first panel 210 by coupling the first coupling hole 312 with the first fixing hole 215. The first coupling portion 310 may fix the first connecting member 300A to the third portion 210c of the first panel 210 by coupling the first coupling hole 312 with the first fixing hole 215. The first coupling portion 310 may form a double layer by contacting the third portion 210c of the first panel 210.

The first connecting member 300A may include a second coupling portion 320 for fixing the second panel 220. The second coupling portion 320 may extend from the first coupling portion 310. The second coupling portion 320 may extend from the first coupling portion 310 integrally with the first coupling portion 310. The second coupling portion 320 may extend downward from the first coupling portion 310.

The second coupling portion 320 may include a second coupling area 321, and a second coupling hole 322 formed in the second coupling area 321. In the second panel 220, a second fixing hole 225 corresponding to the second coupling hole 322 may be provided. The second fixing hole 225 may be provided in the first area A1 of the second panel 220.

A plurality of second fixing holes 225 may be provided in the second panel 220. The second fixing holes 225 may be formed in four edges of the second panel 220 in such a way as to be spaced from each other. Each second fixing hole 225 may be positioned to correspond to the second coupling hole 322 of the connecting member 300.

In the second panel 220, a drawer body coupling portion 226 with which the front panel coupling portion 125 of the drawer body 121 is coupled may be provided. The drawer body coupling portion 226 may be positioned to correspond to the front panel coupling portion 125 provided in a front end of the drawer body 121 (see FIG. 5).

The second coupling portion 320 of the first connecting member 300A may be screwed (S) to the first area A1 of the second panel 220 through the second fixing hole 225 formed in the first area A1.

The first connecting member 300A may include a supporting portion 330 which at least one portion of the second panel 220 is in contact with and is supported on. The supporting portion 330 may extend from the first coupling portion 310 integrally with the first coupling portion 310. The supporting portion 330 may extend from the second coupling portion 320 integrally with the second coupling portion 320. That is, the supporting portion 330 and the first coupling portion 310 may have a step.

The supporting portion 330 may protrude toward the second panel 220. The supporting portion 330 may protrude in the rear direction to be in contact with the first area A1 of the second panel 220. The supporting portion 330 may be in contact with the first area A1 of the second panel 220. The supporting portion 330 may stably support the second panel 220 on the first panel 210 by supporting a portion of the first area A1 of the second panel 220.

The supporting portion 330 of the first connecting member 300A may form a double layer by contacting the second panel 210. The supporting portion 330 of the first connecting member 300A may form the double layer by contacting the first area A1 of the second panel 210.

The second connecting member 300B may include a first coupling portion 310 fixed to the first panel 210. The first coupling portion 310 of the second connecting member 300B may be positioned in the lower portion. The first coupling portion 310 may be positioned to correspond to the second portion 210b of the first panel 210.

The second connecting member 300B may be coupled with an inner surface of the second portion 210b. The second connecting member 300B may be fixed to an inner surface of the lower flange 213.

The first coupling portion 310 of the second connecting member 300B may include a first coupling area 311 supported on the second portion 210b of the first panel 210, and a first coupling hole 312 formed in the first coupling area 311. The first coupling hole 312 may be positioned to correspond to the first fixing hole 215 of the first panel 210. The first coupling hole 312 of the first coupling portion 310 may be coupled with the first fixing hole 215 of the first panel 210 by any method among a rivet 214, welding, or a screw.

The first coupling portion 310 may fix the second connecting member 300B to the first panel 210 by coupling the first coupling hole 312 with the first fixing hole 215. The first coupling portion 310 may fix the second connecting member 300B to the second portion 210b of the first panel 210 by coupling the first coupling hole 312 with the first fixing hole 215.

The second connecting member 300B may include a second coupling portion 320 for fixing the second panel 220. The second coupling portion 320 may extend from the first coupling portion 310. The second coupling portion 320 may extend from the first coupling portion 310 integrally with the first coupling portion 310. The second coupling portion 320 may extend upward from the first coupling portion 310.

The second coupling portion 320 may include a second coupling area 321 and a second coupling hole 322 formed in the second coupling area 321. In the second panel 220, a second fixing hole 225 corresponding to the second coupling hole 322 may be provided. The second fixing hole 225 may be provided in the first area A1 of the second panel 220.

In the second panel 220, a plurality of second fixing holes 225 may be formed. The second fixing holes 225 may be formed in the four edges of the second panel 220 in such a way as to be spaced from each other. The second fixing hole 225 may be positioned to correspond to the second coupling hole 322 of the connecting member 300.

The second coupling portion 320 of the second connecting member 300B may be screwed (S) to the first area A1 of the second panel 220 through the second fixing hole 225 formed in the first area A1.

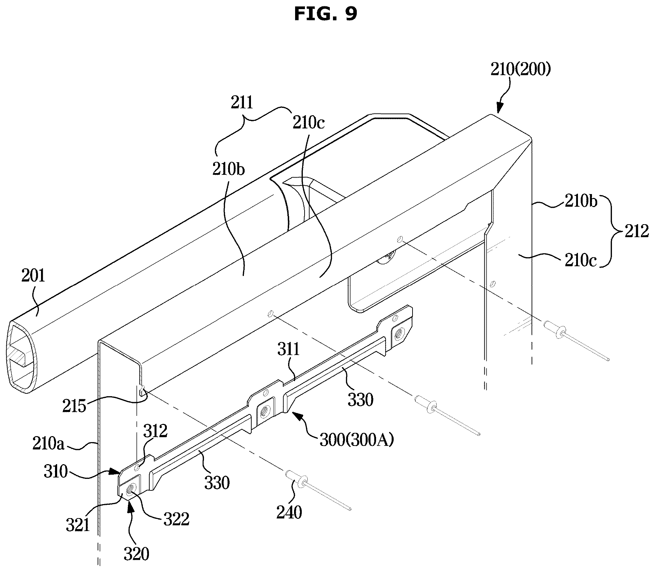

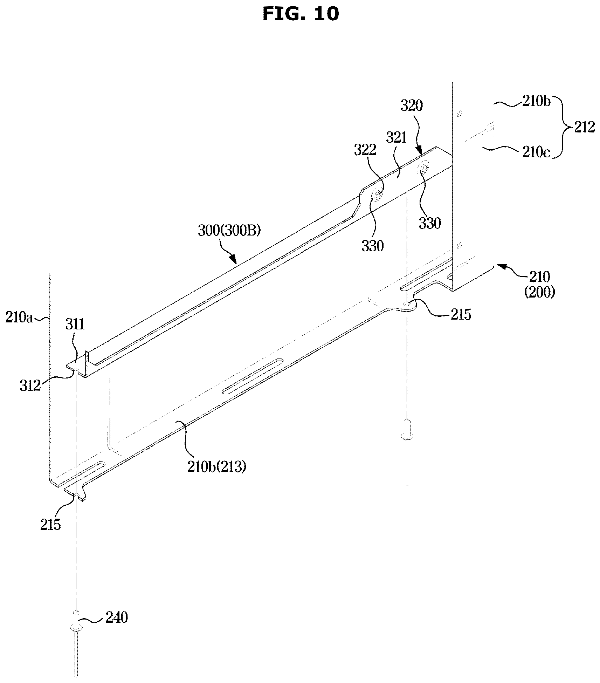

The second connecting member 300B may include a supporting portion 330 which at least one portion of the second panel 220 is in contact with and supported on. The supporting portion 330 may extend from the second coupling portion 320 integrally with the second coupling portion 320. The supporting portion 330 may protrude toward the second panel 220. The supporting portion 330 of the second connecting member 300B may be positioned at a location at which the second coupling hole 322 is formed. The second coupling hole 322 of the second connecting member 300B may be formed in the supporting portion 330 (see FIGS. 9 and 10). The supporting portion 330 may protrude in the rear direction to be in contact with the first area A1 of the second panel 220. The supporting portion 330 may be in contact with the first area A1 of the second panel 220. The supporting portion 330 may stably support the second panel 220 on the first panel 210 by supporting a portion of the first area A1 of the second panel 220.

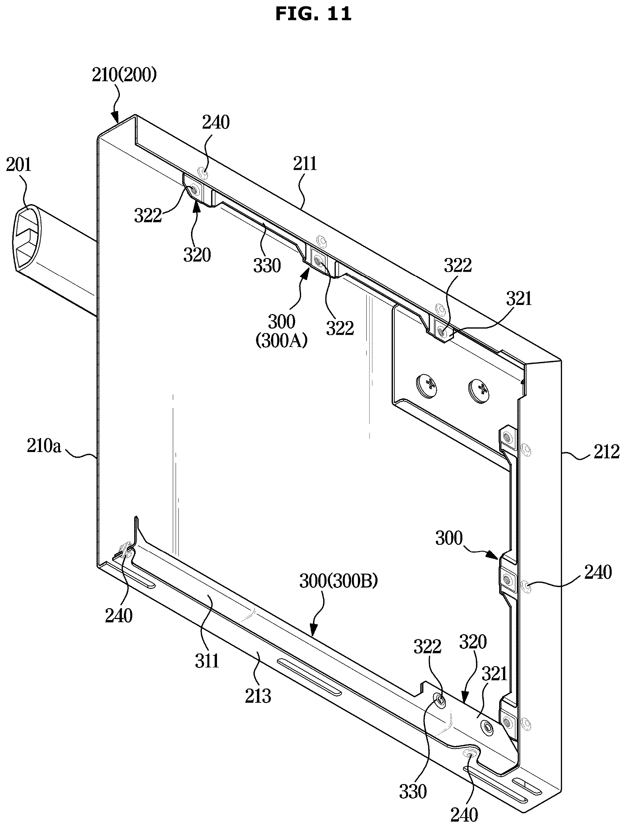

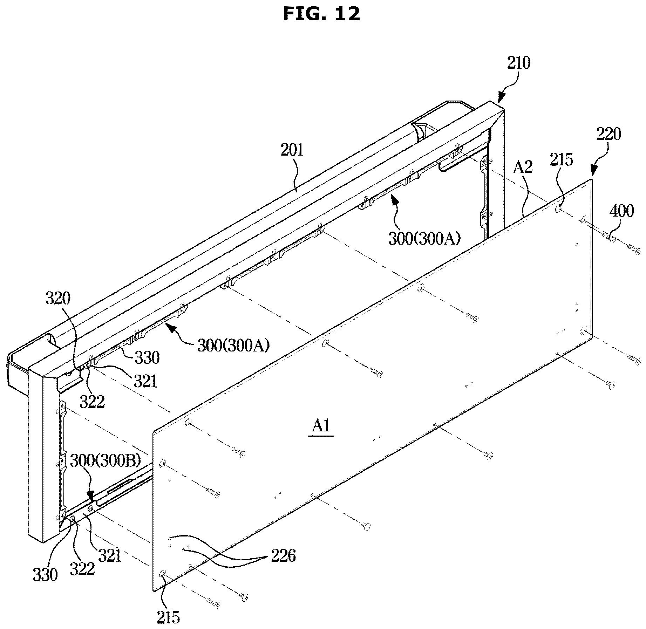

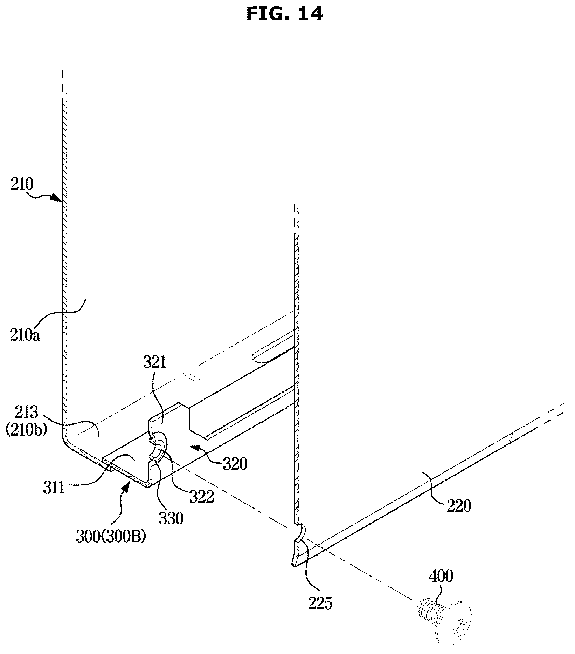

FIGS. 9 and 10 show a coupled state of a connecting member and a first panel of a front panel according to an embodiment, FIG.11 shows a connecting member coupled to a first panel of a front panel according to an embodiment, FIG. 12 shows coupling of a connecting member and a second panel of a front panel according to an embodiment, FIGS. 13 and 14 show coupling of a second panel and a connecting member according to an embodiment, and FIG. 15 is a partially cross-sectional view showing a coupled portion of a second panel, and a connecting member and a first panel according to an embodiment. Hereinafter, descriptions about portions overlapping with those described above will be omitted.

As shown in FIGS. 9 to 15, the front panel 200 may be configured by coupling of the first panel 210 and the connecting member 200 and coupling of the connecting member 200 and the second panel 220.

The connecting member 300 may be coupled with and fixed to the first panel 210. The connecting member 300 may be coupled with the upper flange 211 of the first panel 210. The connecting member 300 may be coupled with the third portion 210c of the upper flange 211. The connecting member 300 may be coupled with the inner surface of the third portion 210c.

The connecting member 300 may form a double layer by contacting the third portion 210c of the first panel 210.

The connecting member 300 may include the first coupling area 311 supported on the first panel 210, and one surface of the first coupling area 311 may be in contact with and supported on the third portion 210c of the first panel 210. The first coupling hole 312 formed in the first coupling area 311 may be positioned to correspond to the first fixing hole 215 of the first panel 210, and the connecting member 300 may be fixed to the first panel 210 by coupling the first coupling hole 312 with the first fixing hole 215.

The connecting member 300 may be coupled with the first panel 210 by any method among a rivet 240, welding, or a screw.

In the connecting member 300 fixed to the third portion 210c of the first panel 210, the supporting portion 330 may protrude in the rear direction, and the second coupling hole 322 with which the second panel 220 is coupled may be provided around the supporting portion 330.

The front panel 200 of the drawer 120 may be provided by coupling the second panel 220 with the connecting member 300 fixed to the first panel 210.

The second panel 220 may be coupled to the first panel 210 through the connecting member 300 with a minimum contact area. The second panel 220 may include the first area A1 being in a shape of a flat plate and spaced from the first panel 210, and the second area A2 formed in the edges of the first area A1 to be inclined by a bending process. The second area A2 may be bent at the first angle θ1 from the first area A1 to be inclined.

The first area A1 of the second panel 220 may be spaced from the first panel 210. More specifically, the first area A1 of the second panel 220 may be spaced from the third portion 210c of the first panel 210 to form a gap.

The first area A1 of the second panel 220 may be spaced from the third portion 210c forming the upper flange 211 of the first panel 210 to form the gap. The second space S2 may be formed between the first area A1 of the second panel 220 and the third portion 210c of the first panel 210. The first area A1 of the second panel 220 may be spaced from the third portion 210c forming the side flange 212 of the first panel 210 to form the gap. The second space S2 may be formed between the first area A1 of the second panel 220 and the third portion 210c of the first panel 210.

The space S between the first portion 210a of the first panel 210 and the second panel 220, including the first space S1 formed by the upper flange 211 and the side flange 212 of the first panel 210 and the second space S2 formed between the third portion 210c of the first panel 210 and the first area A1 of the second panel 220 may prevent heat generated from the drawer heater 130 from being conducted to the first portion 210a of the first panel 210 forming the outer, front surface of the drawer apparatus 100. By blocking heat conduction to the first panel 210, specification temperature may be satisfied even though the drawer apparatus 100 is used for a long time and a consumer's injury may be prevented.

The supporting portion 330 of the connecting member 300 may support the first area A1 of the second panel 220. The supporting portion 330 may protrude to cover the gap of the first area A1. The second panel 220 may be stably supported on and coupled with the first panel 210 by the supporting portion 330 of the connecting member 300. By coupling the first area A1 with the connecting member 300, the second panel 220 may be fixed to the first panel 210. The second panel 220 may be fixed to the first panel 210 by the connecting member 300. The supporting portion 330 of the connecting member 300 may form a double layer by contacting the first area A1 of the second panel 220.

The second panel 220 may be in contact with the first panel 210 in the second area A2 formed in the edges of the first area A1. At least one portion of the second area A2 of the second panel 220 may be in direct contact with the first panel 210. An end of the second area A2 of the second panel 220 may be in contact with the first panel 210. Because the second panel 220 is in contact with the second portion 210b of the first panel 210 at the end of the second area A2, the second panel 220 may be in contact with the first panel 210 with a minimum contact area.

The front panel 200 forming the front surface of the drawer apparatus 100 may minimize heat transfer from the drawer heater 130 to the first panel 210 directly exposed to consumers in the front panel 200 of the drawer 120, by a multi-layer structure of the first panel 210 configured with the first portion 210a, the second portion 210b, and the third portion 210c, the connecting member 300 coupled with the first panel 210, and the second panel 220 coupled with the first panel 210 in such a way as to be spaced from the first panel 210 by the connecting member 300.

The drawer apparatus 100 may form a multi-layer between the first panel 210 and the second panel 220 through the connecting member 300 that forms a double layer between the connecting member 300 and the first panel 210 and between the connecting member 300 and the second panel 220, thereby minimizing transfer of internal heat of the drawer 120, generated by the drawer heater 130, to the front surface of the drawer 120.

Also, because the space S is formed between the first portion 210a of the first panel 210 and the second panel 220 in the front panel 200 and a contact area between the first panel 210 and the second panel 220 is minimized, heat transfer to the first panel 210 forming the outer, front surface of the drawer apparatus 100 may be minimized. Accordingly, specification temperature may be satisfied even though the drawer apparatus 100 is used for a long time or at high temperature and a consumer's injury may be prevented.

Also, because the first panel 210 and the second panel 220 of the front panel 200 are provided as separate components that are coupled with each other through the connecting member 300, the first panel 210 and the second panel 220 may be easily replaced.

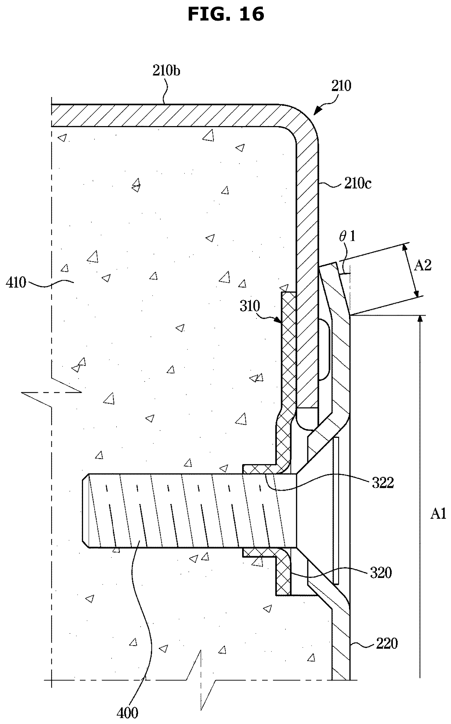

FIG. 16 shows an insulating material provided in a space S between a second panel and a first panel according to an embodiment. Hereinafter, descriptions about portions overlapping with those described above will be omitted.

As shown in FIG. 16, the front panel 200 of the drawer 120 may be configured by coupling of the first panel 210 and the connecting member 200 and coupling of the connecting member 200 and the second panel 220.

The space S including the first space S1 of the front panel 200 and the second space S2 formed between the first area A1 of the second panel 220 and the third portion 210c of the first panel 210 may be provided.

In the first space S1 formed in the first panel 210 of the front panel 200, an insulating material 410 may be provided. In the second space S2 formed by the second panel 210 of the front panel 200, the insulating material 410 may be provided. In the space S of the front panel 200, the insulating material 410 may be provided. The insulating material 410 may be foamed into and filled in the space S between the first panel 210 and the second panel 220. The insulating material 410 may be provided in a shape of a plate between the first panel 210 and the second panel 220. The insulating material 410 may insulate between the first panel 210 and the second panel 220. The insulating material 410 may block heat between the first panel 210 and the second panel 220. The insulating material 410 may reduce heat transfer between the first panel 210 and the second panel 220 of the front panel 200.

The insulating material 410 may reduce heat transfer from the second panel 220 positioned in an inner side of the drawer 120 to the first panel 210 positioned in an outer side of the drawer 120 such that specification temperature is satisfied even though the drawer apparatus 100 is used for a long time or at high temperature.

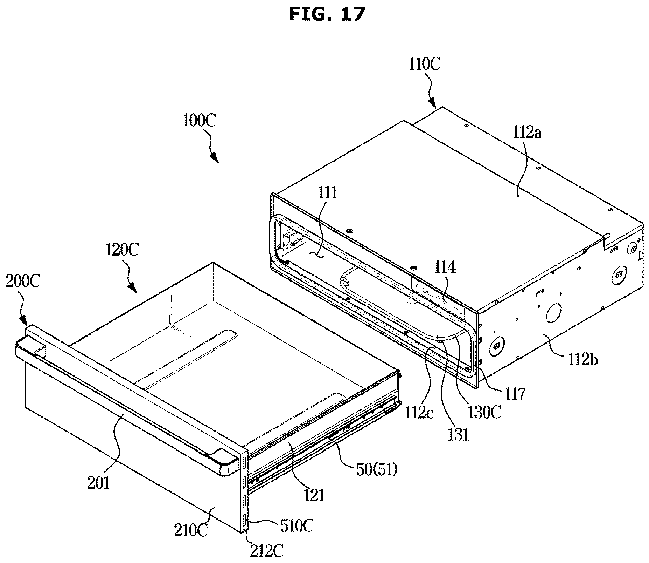

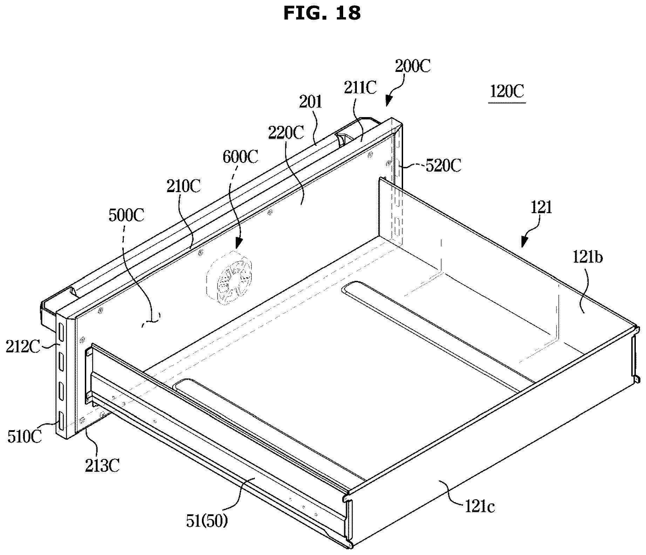

FIG. 17 shows a cooling hole provided in a first panel according to an embodiment, and FIG. 18 shows a cooling flow path and the cooling hole shown in FIG. 17. Hereinafter, descriptions about portions overlapping with those described above will be omitted.

As shown in FIGS. 17 and 18, a drawer apparatus 100C may include a drawer casing 110C and a drawer 120C.

A front panel 200C of the drawer 120C may include a first panel 210C positioned in an outer side of the drawer 120C, and a second panel 220C coupled with the first panel 210C and positioned in an inner side of the drawer 120C.

The first panel 210C of the front panel 200C may form a front surface of the drawer 120C. The first panel 210C may be exposed to outside of the drawer apparatus 100C. The second panel 220C may be coupled with a rear side of the first panel 210C and form a rear surface of the front panel 200C. A space S may be provided between the first panel 210C and the second panel 220C of the front panel 200C.

The front panel 200C may include a cooling flow path 500C for discharging internal heat of the space S. The front panel 200C may include a cooling hole 510C and 520C for discharging internal heat of the space S. The cooling flow path 500C may be formed in the space S of the front panel 200C.

More specifically, the first panel 210C may include an upper flange 211C provided in the upper portion, a side flange 212C provided in both the side portions, and a lower flange 213C provided in the lower portion. A first space S1 may be formed by the upper flange 211C, the side flange 212C, and the lower flange 213C of the first panel 210C.

The first panel 210C may include at least one cooling hole 510C and 520C. The cooling hole 510C and 520C may be provided in the side flange 212C of the first panel 210C. In the first panel 210C, a plurality of cooling holes 510C and 520C may be arranged to be spaced from each other. The cooling hole 510C and 520C may include at least one of a hole or slit. The cooling hole 510C and 520C may include a first cooling hole 510C positioned in one side flange 212C of the front panel 200C, and a second cooling hole 520C positioned in another side flange 212C of the front panel 200C. The cooling flow path 500C may be formed between the first cooling hole 510C and the second cooling hole 520C.

Heat generated through the drawer heater 130C of the drawer apparatus 100C may be transferred through the second panel 220C of the front panel 200C and then discharged to the first cooling hole 510C or the second cooling hole 520C through the internal space S of the front panel 200C.

Also, in the cooling flow path 500C of the front panel 200C, a fan 600C for discharging heat may be provided. The fan 600C may discharge internal heat of the internal space S of the front panel 200C, that is, the cooling flow path 500C to the first cooling hole 510C and the second cooling hole 520C.

Also, the fan 600C may cause outside air to enter any one of the first cooling hole 510C or the second cooling hole 520C, cool the internal space S of the front panel 200C, and then be discharged through another one of the first cooling hole 510C or the second cooling hole 520C. In the current embodiment, an example in which the cooling hole 510C and 520C is provided in the side flange 212C is shown, although not limited thereto. For example, the cooling hole may be formed in the lower flange of the first panel to take in outside air, and the outside air may be discharged through the first and second cooling holes of the side flange.

The fan 600C may operate after a preset time elapses from when the drawer apparatus 100C operates. The fan 600C may be controlled by a controller 115 of the drawer apparatus 100C.

By discharging heat through the cooling hole 510C and the cooling flow path 500C provided in the front panel 200C of the drawer apparatus 100C, heat generated from the drawer heater 130C of the drawer apparatus 100 may be prevented from being transferred to the front panel 200C, heat conduction to the first panel 210C forming an outer, front surface of the drawer apparatus 100C may be blocked, specification temperature may be satisfied even though the drawer apparatus 100C is used for a long time or at high temperature, and a consumer's injury may be prevented.

The drawer apparatus 100 according to an embodiment may include: the drawer casing 110; the drawer heater 130 provided in the drawer casing 110; and the drawer 120 configured to slide to be inserted into the drawer casing 110 and slide to be withdrawn from the drawer casing 110, the drawer 120 including the drawer body 121 having the internal space 120a accommodating a cooking material, and the front panel 200 coupled with the front portion of the drawer body 121, wherein the front panel 200 may include: the first panel 210 forming the front surface of the front panel; the second panel 220 provided behind the first panel 210; and the connecting member 300 connecting the first panel to the second panel, wherein the connecting member 300 may be configured to form a double layer between the connecting member and the first panel and between the connecting member and the second panel.

According to the disclosure, by minimizing a contact area between components, surface temperature of the front panel may be maintained within specifications.

Also, the drawer apparatus capable of reducing heat conduction to the surface through the connecting member for forming a double layer between components may be provided.

Also, heat conduction of the surface of the front panel may be reduced by the multi-layer structure of the front panel, and because the front panel is completely detachable, a consumer who wants to change a color, etc. of the front panel may replace the front panel after purchasing another one. Also, by subdividing a service unit, service costs may be reduced.

Also, the second panel 200 may include the first area A1 spaced from the first panel 210 to reduce heat conduction from heat of the internal space 120a of the drawer, and the second area A2 bent from the edge of the first area A1 to be in contact with the first panel 210. The second area A2 may be an inclined portion bent toward the first panel 210 to be in contact with the first panel 210. At least one portion of the second area A2 of the second panel 220 may be in contact with the first panel 210.

Accordingly, by minimizing a contact area between components, the surface temperature of the front panel may be maintained with the specifications.

The connecting member 300 may include the supporting portion 330 supporting the first area A1 of the second panel 220. At least one portion of the first area A1 of the second panel 220 may be in contact with the supporting portion 330. The double layer may be formed between the supporting portion and the first area A1. The connecting member 300 may include the first coupling portion 310 coupled with the first panel 210, and the second coupling portion 320 extending from the first coupling portion 310 and coupled with the second panel 220. The double layer may be formed between the first coupling portion and the first panel. The first coupling portion 310 may include the first coupling area 311 supported on the first panel 210, and the first coupling hole 312 formed in the first coupling area 311, and the first panel 210 may include the first fixing hole 215 corresponding to the first coupling hole 312. The second coupling portion 320 may include the second coupling area 321 and the second coupling hole 322 formed in the second coupling area 321, and the second panel 220 may include the second fixing hole 225 corresponding to the second coupling hole 322. The second fixing hole 225 may be formed in the first area A1. The first coupling portion 310 may be coupled by at least one method of a rivet, welding, or a screw. The supporting portion 330 may be formed by a foaming process. The first area A1 may have a gap between the first area A1 and the first panel 210, and the supporting portion 330 may protrude to cover the gap.

According to the disclosure, by improving a front panel assembly structure of the drawer apparatus to minimize a contact area between components, heat conduction may be reduced.

Also, by omitting a component for internal insulation of the front panel, a structure for fixing the component, etc., weight may be reduced, and by omitting a high cost insulating material such as glass wool, costs may be reduced.

Also, heat conduction to the surface may be reduced by a multi-layer structure through the connecting member for forming a double layer between components.

Also, heat conduction of the surface may be reduced by the multi-layer structure, and a consumer who wants to change a color, etc. of the front panel may replace the front panel after purchasing another one because the front panel is completely detachable through a simple structure.

Also, by subdividing a service unit, service costs may be reduced.

The drawer apparatus according to an embodiment may include: the drawer casing 110 having the opening 111; the drawer 120 configured to slide to be inserted into the drawer casing 110 and slide to be withdrawn from the drawer casing; the drawer heater 130 installed in the drawer casing 110 and configured to heat the internal space 120a of the drawer 120; the first panel 210 forming the front surface of the drawer 120 and exposed to the outside; the connecting member 300 connected to the first panel 210; and the second panel 220 provided behind the first panel, wherein the second panel may include the first area A1 spaced from the first panel to prevent heat conduction from the drawer heater 130, and the second area A2 bent from the edges of the first area A1 to be in contact with the first panel 210. According to the disclosure, by improving a front panel assembly structure of the drawer apparatus to minimize a contact area between components, heat conduction may be reduced and weight and costs may be reduced.

The four edges of the second panel may be bent toward the first panel and inclined to be in contact with the first panel.

Accordingly, surface temperature of the front panel may be maintained within specifications by minimizing a contact area between components, heat conduction of the surface may be reduced by a multi-layer structure, and a consumer who wants to change a color, etc. of the front panel may replace the front panel after purchasing another one because the front panel is completely detachable.

The connecting member 300 may include the first coupling portion 310 coupled with the first panel 210, the second coupling portion 320 extending from the first coupling portion 310 and coupled with the second panel 220, and the supporting portion 330 coupled with a portion of the second panel 220, and the supporting portion and the first coupling portion may have a step. The first coupling portion 310 may include the first coupling area 311 supported on the first panel 210 and the first coupling hole 312 formed in the first coupling area 311, and the first panel 210 may include the first fixing hole 215 corresponding to the first coupling hole 312. The second panel may have a gap between the second panel and the first panel 210, and the supporting portion 330 may protrude to cover the gap.

According to the disclosure, by improving a front panel assembly structure of the drawer apparatus to minimize a contact area between components, heat conduction may be reduced, and weight and costs may be reduced.

However, effects that may be achieved by the disclosure are not limited to the above-mentioned effects, and other effects not mentioned will be clearly understood by one of ordinary skill in the technical field to which the disclosure belongs from the following descriptions.

While the above descriptions about the drawer apparatus, given with reference to the accompanying drawings, are based on specific shapes and directions, various modifications and changes may be made by those of skilled in the art, and such various modification and changes should be interpreted to be included in the scope of rights of the disclosure.

## Claims

1. A drawer apparatus comprising:
a drawer casing;
a drawer heater provided in the drawer casing; and
a drawer configured to slide to be inserted into the drawer casing and slide to be withdrawn from the drawer casing, the drawer including a drawer body including an internal space accommodating a cooking material, and a front panel coupled with a front portion of the drawer body,
wherein the front panel comprises:
a first panel forming a front surface of the front panel;
a second panel provided behind the first panel; and
a connecting member connecting the first panel to the second panel, wherein the connecting member is configured to form a double layer between the connecting member and the first panel and between the connecting member and the second panel.

2. The drawer apparatus of claim 1, wherein the second panel includes a first area spaced from the first panel and configured to reduce heat conduction from heat of an internal space of the drawer, and a second area bent from an edge of the first area to be in contact with the first panel.

3. The drawer apparatus of claim 2, wherein the second area is an inclined portion formed by being bent toward the first panel to be in contact with the first panel.

4. The drawer apparatus of claim 2, wherein at least one portion of the second area of the second panel is in contact with the first panel.

5. The drawer apparatus of claim 2, wherein the connecting member includes a supporting portion supporting the first area of the second panel.

6. The drawer apparatus of claim 2, wherein at least one portion of the first area of the second panel is in contact with the supporting portion.

7. The drawer apparatus of claim 5, wherein the double layer is formed between the supporting portion and the first area.

8. The drawer apparatus of claim 6, wherein the connecting member includes
a first coupling portion coupled with the first panel, and
a second coupling portion extending from the first coupling portion and coupled with the second panel.

9. The drawer apparatus of claim 8, wherein the double layer is formed between the first coupling portion and the first panel.

10. The drawer apparatus of claim 8, wherein the first coupling portion includes a first coupling area supported on the first panel, and a first coupling hole formed in the first coupling area, and
the first panel includes a first fixing hole corresponding to the first coupling hole.

11. The drawer apparatus of claim 9, wherein the second coupling portion includes a second coupling area, and a second coupling hole formed in the second coupling area, and
the second panel includes a second fixing hole corresponding to the second coupling hole.

12. The drawer apparatus of claim 11, wherein the second fixing hole is formed in the first area.

13. The drawer apparatus of claim 10, wherein a first coupling portion is coupled by at least one method among a rivet, welding, or a screw.

14. The drawer apparatus of claim 9, wherein the supporting portion is formed by a foaming process.

15. The drawer apparatus of claim 14, wherein the first area includes a gap between the first area and the first panel, and
the supporting portion protrudes to cover the gap.
